# EUROPÄISCHE PATENTSCHRIFT

(11) **EP 2 148 757 B1**
(45) Veröffentlichungstag und Bekanntmachung des Hinweises auf die Patenterteilung: **12.06.2013**
(21) Anmeldenummer: 08758000.7
(22) Anmeldetag: 30.04.2008
(51) Int. Cl.: B23B 51/06, B23D 77/00

(54) **SPANABHEBENDES WERKZEUG UND VERFAHREN ZUR VERSORGUNG DER SCHNEIDEN EINES SOLCHEN WERKZEUGS MIT KÜHL-/SCHMIERMITTEL**
CUTTING TOOL AND PROCESS FOR SUPPLYING THE CUTTING EDGES OF SUCH A TOOL WITH COOLING-/LUBRICATING LIQUID
OUTIL D'ENLÈVEMENT DE COPEAUX ET PROCEDE D'ALIMENTATION DES ARÊTES DE COUPE D'UN TEL OUTIL AVEC FLUIDE FRIGORIGÈNE /LUBRIFIANT

(30) Priorität: 20.05.2007 DE 102007023167
(43) Veröffentlichungstag der Anmeldung: 03.02.2010
(73) Patentinhaber: Gühring OHG, 72458 Albstadt (DE)
(72) Erfinder: KLEINER, Gilbert, 72514 Inzigkofen (DE)
(74) Vertreter: Meitinger, Thomas Heinz
(86) Internationale Anmeldenummer: PCT/DE2008/000739
(87) Internationale Veröffentlichungsnummer: WO 2008/141605

(56) Entgegenhaltungen:
- WO-A-92/03245
- DE-A1- 4 019 428
- DE-A1- 4 200 808
- DE-U1- 20 300 520
- US-A1- 2003 095 841

## Beschreibung

Die Erfindung betrifft ein drehantreibbares spanabhebendes Werkzeug, insbesondere ein Feinbearbeitungswerkzeug wie zum Beispiel eine Reibahle, gemäß der US 2003/0095841.

Derartige Werkzeuge müssen unterschiedlichsten Anforderungen genügen. Zum einen wird von solchen Werkzeugen eine immer höhere Bearbeitungsgenauigkeit gefordert, was eine hohe Maßhaltigkeit der Schneidenpositionierung und eine hohe Stabilität bei der dynamischen Beanspruchung der Schneiden und des Schaftes voraussetzt. Zum anderen wird von derartigen Werkzeugen eine immer höhere Standzeit verlangt, weshalb in derartige Werkzeuge regelmäßig eine Kühl-/Schmiermittelversorgung integriert wird. Diese in das Werkzeug integrierte Kühl-/Schmiermittelversorgung soll dabei sicherstellen, dass die am höchsten beanspruchten Bereiche des Werkzeugs im Einsatz zu jedem Zeitpunkt eine ausreichende Versorgung mit Kühl-/Schmiermittel erhalten.

Es gibt im Stand der Technik verschiedene Ansätze der Gestaltung gattungsbildender Werkzeuge mit integrierter Kühl-/Schmiermittelversorgung.

In Dokument DE 10347755 A1 ist ein gattungsbildendes Werkzeug in der Ausgestaltung als Hochleistungsreibahle gezeigt, bei der ein mit einem Schaftteil dreh- und axialfest verbundener Schneidkopf, der aus einem Hartstoff, wie zum Beispiel einem Sinterwerkstoff hergestellt sein kann über einen zentralen Kühl-/Schmiermittelversorgungskanal im Werkzeugschaft und ein Radialkanalsystem im bzw. an der Schnittstelle zum Schneidkopf mit Kühl-/Schmiermittel versorgt wird. Die radial außen liegenden Mündungsöffnungen des Radialkanalsystems sind von einer Kühlmittel-Leithülse abgedeckt, die sich in Richtung der Werkzeugspitze bis in einen Auslaufbereich der Spannuten erstreckt und somit dafür sorgen kann, dass das zugeführte Kühl-/Schmiermittel mit möglichst geringen Verlusten in die Spannuten eingespeist werden kann.

Diese bekannte in das Schaftwerkzeug integrierte Kühl-/Schmiermittelversorgung eignet sich auch für die sogenannte MMS (Minimalmengenschmierung) -Technologie, gemäß der das Kühl-/Schmiermittel - im Gegensatz zur sogenannten "Nassbearbeitung" - in extrem geringer Konzentration in einer Druckluftströmung zu den Schneiden geführt wird. Das Schmiermedium wird also während der Bearbeitung als Aerosol den Schneiden zugeführt, mit dem Ziel, in unmittelbarer Nähe der Schneidkanten einen ausreichenden Schmierfilm zu erzeugen.

Bei der MMS-Technologie kommt es allerdings darauf an, das Schmiermittel in genauer Dosierung und in möglichst gleichbleibender Konzentration an die Schneiden zu leiten. Um diese Aufgabe bei gleichzeitiger Verringerung des herstellungstechnischen Aufwandes für die Herstellung des Werkzeugs zu lösen, wird im Dokument DE 202004008566 U1 eine Hochleistungsreibahle beschrieben, bei der sich eine Hülse am Einspannabschnitt bis zum Nutenauslaufbereich des Werkzeugs erstreckt, wobei die Hülse einstückig mit dem Einspannabschnitt ausgebildet ist und im Inneren zur Ausbildung axialer Kühl-/Schmiermittelkanäle den Reibahlenschaft aufnimmt. Die sich axial erstreckenden Schmiermittelkanäle werden von einem zentralen Schmiermittelkanal im Einspannabschnitt derart versorgt, dass der Kühlkanal vom Schaftende bis zum Nutenauslaufbereich einen konstanten Querschnitt erhält.

In beiden bekannten Fällen lässt sich die Kühl-/Schmiermittelversorgung der Schneiden nur durch einen entsprechend großen Aufwand bei der Herstellung des Werkzeugs erzielen. Darüber hinaus müssen die bekannten Werkzeuge aus verschiedenen Komponenten zusammengestellt werden.

Die US2003/0095841A1 beschreibt eine Reibahle mit integrierter Kühl/Schmiermittelversorgung, zur Bearbeitung von Bohrungen, insbesondere Durchgangsbohrungen, mit einem Schneidteil an dem eine Vielzahl von Schneidkanten und Spannuten ausgebildet sind, und einem Schaft, der auf einer dem Schneidteil abgewandten Seite einen Einspannabschnitt ausbildet, wobei im Einspannabschnitt eine der Anzahl der Spannuten entsprechende Anzahl von Kühl-/Schmiermittelkanälen ausgebildet sind, die jeweils eine axiale Austrittsöffnung aus dem Einspannabschnitt haben.

Der Erfindung liegt deshalb die Aufgabe zugrunde, ein drehantreibbares spanabhebendes Werkzeug der eingangs beschriebenen Art zu schaffen, das die heutzutage geforderte Standzeit der Schneiden bei einem vereinfachten Aufbau des Werkzeugs sicherstellt. Eine weitere Aufgabe besteht darin, ein neues Verfahren zu schaffen, mit dem Kühl-/Schmiermittel sowohl bei der Nass- auch bei der Trockenbearbeitung (MMS-Technologie) mit geringem Aufwand, jedoch prozesssicher und in ausreichender Mange an hochbelastete Schneiden eines gattungsbildenden Werkzeugs herangebracht werden kann.

Diese Aufgabe wird hinsichtlich des Werkzeugs durch die Merkmale des Patentanspruchs 1 und hinsichtlich des Verfahrens durch die Merkmale des Anspruchs 14 gelöst.

Erfindungsgemäß werden in den Einspannabschnitt des Werkzeugs Kühl-/Schmiermittelkanäle derart integriert, dass das aus diesen Kühl-/Schmiermittelkanälen axial austretende Kühl-/Schmiermittel auf der Außenseite des zum Schneidteil führenden Schafts zu jeweils einer Spannut des Schneidteils geführt wird. Es wurde durch Versuche herausgefunden, dass mit dieser Gestaltung der Werkzeuge sowohl bei der sogenannten Nassbearbeitung, d.h. bei Verwendung von flüssigen Kühl-/Schmiermitteln, als auch bei der sogenannten "Trockenbearbeitung" gemäß der MMS-Technologie, im Bereich der Spannuten und auch an den für die Standzeit entscheidenden Flächen der Werkzeugschneiden eine ausreichende Schmiermittelversorgung selbst dann stabilisiert werden kann, wenn der Arbeitsdruck des Kühl-/Schmiermittels auf einem leicht beherrschbaren Niveau von beispielsweise über 5 bar gehalten wird.

Untersuchungen der Kühl-/Schmiermittelströmung entlang der Werkzeugachse, d.h. vom Einspannabschnitt bis zur Werkzeugspitze haben gezeigt, dass der aus den Kühl-/Schmiermittelkanälen austretende Fluidstrahl selbst dann, wenn er unter Einwirkung der auftretenden Zentrifugalkräfte eine beträchtliche axiale Länge in Richtung Schneidkopf ohne radial außenliegende Begrenzung zurücklegen muss, einen ausreichend großen Kernbereich mit hoher Strömungsgeschwindigkeit in dem Moment besitzt, in dem das Werkzeug in die zu bearbeitende Bohrung, insbesondere in die Durchgangsbohrung eintaucht, die einer Fein-Nachbearbeitung unterzogen werden soll. Mit zunehmender Eingriffslänge der Werkzeugschneiden in der Durchgangsbohrung bildet sich sogar ein immer stabiler werdendes Strömungsprofil in den einzelnen von den Spannuten und der Bohrungswandung definierten Strömungskanälen aus. Dadurch wird sichergestellt, dass die Werkzeugschneiden insbesondere in den Bereichen, in denen es besonders wichtig ist, mit ausreichenden Mengen an Kühl-/Schmierstoff versorgt werden. Weil sich die Strömung in diesen Strömungskanälen mit zunehmendem Abstand von der Werkstückoberfläche immer besser ausgeprägt, wird auch die verhältnismäßig hoch belastete Werkzeugschneide nahe der Werkzeugspitze wirksam gekühlt bzw. geschmiert, wodurch es gelingt, die Standzeit des Werkzeugs auf hohem Niveau zu halten.

Dabei ergibt sich durch die erfindungsgemäßen Maßnahmen der zusätzliche Vorteil, dass die Kühl-/Schmiermittelstrahlen, die aus den stirnseitigen Austrittsöffnungen im Einspannabschnitt austreten, besonders wirksam zum Abtransport der Späne in Vorschubrichtung des Werkzeugs herangezogen werden können. Dies eröffnet die Möglichkeit, Hochleistungs-Feinbearbeitungswerkzeuge, wie zum Beispiel Hochleistungs-Reibahlen mit der vorstehend angesprochenen integrierten Kühl-/Schmiermittelversorgung auszustatten.

Derartige Hochleistungs-Reibahlen werden mit beträchtlichen Schnittgeschwindigkeiten betrieben. Es hat sich aber gezeigt, dass die aus den axialen Austrittsöffnungen austretenden Einzelstrahlen selbst bei verhältnismäßig kleinen Strömungsmitteldrücken in der Größenordnung von etwa 5 bar, d.h. von Strömungsmitteldrücken, die sich ohne weiteres im Bereich von Arbeitsdrücken herkömmlicher Kühl-/Schmiermittelversorgungseinheiten bewegen, ausreichend stabil sind, um den vorstehend beschriebenen Effekt der prozesssicheren Auffüllung der von den Spannuten des im Eingriff befindlichen Schneidteils begrenzten Strömungskanäle selbst bei erheblichen, auf die Fluidstrahlen einwirkenden Zentrifugalkräften zu bewirken. Insgesamt ergibt sich also durch das erfindungsgemäße Konzept der Werkzeuggestaltung der Vorteil, dass durch die außenliegende Zuführung des Kühl-/Schmiermittels die absolute Kühl-/Schmiermittelmenge in den Spannuten erheblich angehoben werden kann. Die Zufuhr von Kühl-/Schmiermittel an die für das Werkzeug entscheidenden Stellen ist verlustarm, da Umlenkungen der Kühl-/Schmiermittelströmung vermieden sind. Damit eignet sich das erfindungsgemäße Konzept nicht nur für die Nassbearbeitung, sondern auch für die sogenannte Trockenbearbeitung bzw. für die Mindermengenschmierung (MMS-Technologie). Die durch die erfindungsgemäße Gestaltung erhöhte Strömungsgeschwindigkeit des Kühl-/Schmiermittels in den Spannuten bzw. im Spanraum in axialer Richtung kann dabei wirksam zum Späneabtransport genutzt werden.

Die erfindungsgemäße Integrierung der Kühl-/Schmiermittelversorgung in das Werkzeug eröffnet darüber hinaus die Möglichkeit, das Werkzeug einstückig und mit geringer Masse aufzubauen. Dies ergibt dann besondere Vorteile, wenn das Werkzeug zumindest im Bereich des Einspannabschnitts und des sich anschließenden Schaftes aus einem sinterfähigen Hartstoff, beispielsweise aus einem Vollhartmetall oder einem Cermet-Werkstoff besteht. Es lässt sich beispielsweise dann, wenn eine VHM-Reibahle mit einem Nenndurchmesser von 8mm hergestellt werden soll, bezüglich des Rohmaterials eine Materialersparnis von über 20% erzielen. Da die erfindungsgemäße Gestaltung der in das Werkzeug integrierten Kühl-/Schmiermittelversorgung mit einem stark verringerten Volumen des Werkzeugs im Bereich des Schaftes und des Einspannabschnitts auskommt, ergibt sich der zusätzliche wirtschaftliche Vorteil eines verringerten Zeitspanvolumens bei der Herstellung des Werkzeugs. Es genügt beispielsweise, die Spannuten ausschließlich im Bereich des Schneidteils einzuschleifen. Im übrigen Bereich des Werkzeugs, d.h. im Bereich des Schafts und des Einspannabschnitts, kann ein spanabhebender Bearbeitungsvorgang vollständig entfallen. Die innenliegenden Kühl-/Schmiermittelkanäle im Einspannabschnitt und gegebenenfalls die außen liegenden Führungsrinnen im Schaft können bereits bei der Herstellung eines Sinterformrohlings weitgehend mit Endmaß geschaffen werden.

Hinsichtlich des Verfahrens wird die Aufgabe mit den Merkmalen des Patentanspruchs 14 gelöst. Es hat sich gezeigt, dass der vorstehend beschriebene erfindungsgemäße Aspekt einer ausreichenden Versorgung des Schneidteils an den entscheidenden Stellen mit Kühl-/Schmiermittel ohne weiteres schon dann sichergestellt werden kann, wenn das Kühl-/Schmiermittel unter einem - bislang gängigen - Druck von über 5bar zugeführt wird. Durch Variation des Systemdrucks kann den Besonderheiten des jeweiligen Einsatzgebiets des Werkzeugs Rechnung getragen werden, indem zum Beispiel der Systemdruck mit zunehmender Länge des Werkzeugschafts und/oder mit zunehmender, auf die einzelnen Kühl-/Schmiermittelstrahlen einwirkender Fliehkraft entsprechend angehoben wird. Vorteilhafte Ausgestaltungen der Erfindung sind Gegenstand der Unteransprüche.

Wenn sich die Kühl-/Schmiermittelkanäle im Einspannabschnitt jeweils in einer im Schaft ausgebildeten Führungsvertiefung fortsetzen, die zu der zugeordneten Spannut des Schneidteils geführt ist, werden die einzelnen Kühl-/Schmiermittelstrahlen auf dem Weg zu den Spannuten zusätzlich stabilisiert, wodurch der Kühl-/Schmiermitteldurchsatz im Bereich des Schneidteils und damit die eingangs beschriebenen Effekte der Schneidenkühlung und des Späne-Abtransports weiter gesteigert werden.

Gleichzeitig ergibt sich eine weiter vergrößerte Materialersparnis für den Fall, dass das Werkzeug aus einem sinterfähigen Material, wie zum Beispiel aus Vollhartmetall oder einem Cermet-Werkstoff hergestellt wird. In diesem Fall ergibt sich der besondere zusätzliche Vorteil, dass die für die Integration der Kühl-ISchmiermtittelversorgung erforderlichen Ausnehmungen mit genauer Formgebung bereits im Rohling des Werkzeugs mit guter Maßhaltigkeit hergestellt bzw. vorbereitet werden können, wodurch das erforderliche Zeitspanvolumen bei der Herstellung des Werkzeugs weiter verringert werden kann.

Die im Einspannabschnitt ausgebildeten Kühl-/Schmiermittelkanäle können umfangsseitig radial nach außen offen sein. Die Kühl-/Schmiermittelkanäle werden dann im Bereich des Einspannabschnitts durch das Spannfutter geschlossen.

Um bei Verwirklichung großer Spannkräfte mehr Spielraum für die geometrische Gestaltung des Querschnitts der Kühl-/Schmiermittelkanäle im Einspannabschnitt zu erhalten, ist es von besonderem Vorteil, die Kühl-/Schmiermittelkanäle im Einspannabschnitt umseitig geschlossen zu gestalten. Diese innenliegenden Kanäle können bei Verwendung von Sinterwerkstoffen, wie zum Beispiel Vollhartmetall- oder Cermet-Werkstoffen bereits mit geringem herstellungstechnischen Aufwand mit großer Formgenauigkeit bereits in den Sinterrohling eingebracht, beispielsweise mit extrudiert werden. Es ergibt sich hierdurch eine weitere Materialersparnis beim Rohmaterial. Die Formgebung der Innenkanäle ist dabei ausreichend genau, um die eingangs beschriebenen Effekte der Kühl-/Schmiermittelversorgung zu erzielen, ohne die innenliegenden Kanäle einer Nachbearbeitung unterziehen zu müssen. Nebenbei ergibt sich eine verbesserte Stabilität des Werkzeugs, die Vorteile hinsichtlich einer verbesserten Schwingungsdämpfung und Drehmomentübertragung hat.

Eine besonders gute Versorgung der Schneiden mit Kühl-/Schmiermittel und ein besonders guter Abtransport der Späne auch dann, wenn diese in großen Mengen anfallen, wie es zum Beispiel bei Hochleistungs-Reibahlen der Fall ist, ergibt sich mit der Weiterbildung des Patentanspruchs 4. Die Spannuten eines gattungsbildenden Werkzeugs können eine verhältnismäßig komplexe Formbildung haben. Es lassen sich jedoch insbesondere dann, wenn die im Einspannabschnitt vorgesehenen Kühl-/Schmiermittelkanäle bereits im Urformprozess, wie zum Beispiel in einem Extrusionsprozess oder einem Formpressprozess eingebracht werden, derartige, kompliziertere Formgebungen des Kühlkanalabschnitts bereits im Sinterrohling mit guter Formgenauigkeit realisieren. Mit diesen Maßnahmen kann ein Maximum an Kühl-/Schmiermittel-Volumenstrom in einem solchen radialen Abstand von der Werkzeugachse bereitgestellt werden, dass im Eingriffsbereich des Werkzeugs in den Spannuten eine besonders kräftige und ausgeprägte Kühl-/Schmiermittelströmung aufgebaut und stabilisiert wird, wodurch die Leistungsfähigkeit des Werkzeugs weiter angehoben wird.

Die besten Ergebnisse lassen sich dann erzielen, wenn in einer axialen Projektion betrachtet der Querschnitt der Austrittsöffnung des innenliegenden Kühl-/Schmiermittelkanals im Einspannabschnitt die Spannut im Schneidteil vollständig abdeckt bzw. mit dieser zumindest deckungsgleich ist.

Die eingangs beschriebenen Vorzüge des erfindungsgemäßen Werkzeugs stellen sich jedoch in maßgeblichem Umfang auch dann noch ein, wenn die Spannut um ein gewisses Maß bezüglich des Kühl-/Schmiermittelstrahls radial um ein gewisses Maß nach innen versetzt ist. Dies erlaubt es, Werkzeuge mit verschiedenen Nenn-Arbeitsdurchmessem aus ein und demselben Werkzeugrohling mit innenliegenden Kühl-/Schmiermittelkanälen im Einspannabschnitt herzustellen, indem der Einspannabschnitt und die Geometrie des Schaftes unverändert gehalten und lediglich im Bereich des Schneidteils eine unterschiedlich große spanabhebende Bearbeitung auf Endmaß des Nenn-Arbeitsdurchmessers und/oder der Spannuten vorgenommen wird. Die in das Schneidteil eingebrachten Spannuten laufen dann entweder bündig oder mit einem sanften Übergang in die im Schaft vorliegenden Führungsvertiefungen für die einzelnen Kühl-/Schmiermittelstrahlen aus.

Versuche haben gezeigt, dass dann, wenn die Spannut im Schneidteil radial etwas nach innen zum Querschnitt des Kühl-/Schmiermittelstrahls versetzt ist, die Geometrie des Querschnitts der axialen Austrittsöffnung gemäß Anspruch 1 auf die Geometrie der Spannut abgestimmt sein solite, damit sich im Eingriffsbereich des Werkzeugs in den Spannuten ein solches Geschwindigkeitsprofil einstellt, das in der Schneidenebene eine besonders gute Versorgung mit Schmiermittel sicherstellt.

Der Querschnitt der axialen Austrittsöffnung ist hinsichtlich Lage und/oder Form der Geometrie der zugeordneten Spannut derart angepasst , dass sich in der axialen Projektion eine möglichst große Überdeckung der betreffenden Querschnittsflächen ergibt. Je nach Anwendung kann jedoch der Spannabschnitt einen anderen Durchmesser aufweisen als das Schneidteil. Um in einem solchen Fall dennoch eine ausreichende Versorgung des Schneidteils an den entscheidenden Stellen mit Kühl-/Schmiermittel sicherzustellen, können die Kühl-/Schmiermittelkanäle im Einspannabschnitt unter einem Anstellwinkel zu einer zugeordneten Spannut des Schneidteils geführt sein. Auf diese Weise können durch die Veränderung des Anstellwinkels der Kühl-/Schmiermittelkanäle Schneidteile unterschiedlichster Größen mit Kühl-/Schmiermittel versorgt werden, ohne dabei den (Standard-)Durchmesser des Spannabschnitts des Werkzeugs verändern zu müssen.

Wenn die Kühl-/Schmiermittelkanäle zur Werkzeugachse angestellt sind, sollte zur Stabilisierung des Kühl-/Schmiermittelstrahls auch die Führungsvertiefung zu der zugeordneten Spannut des Schneidteils unter einem Anstellwinkel, vorteilhafterveise unter demselben Anstellwinkel, geführt sein.

Eine besonders gute Stabilisierung des aus dem Einspannabschnitt austretenden Kühl-/Schmiermittelstrahls ergibt sich mit der Weiterbildung des Anspruchs 8. Bei der Herstellung des Werkzeugs aus einem Hartstoff, wie zum Beispiel einem Sinterwerkstoff wie Hartmetall oder Cermet lässt sich der stufenlose Übergang der im Einspannabschnitt ausgebildeten Kühl-/Schmiermittelkanäle in die zugeordneten Führungsvertiefungen im Schaft schon im Rohling, d.h. im Urformprozess herstellen. Es ist jedoch gleichermaßen möglich, diesen stufenlosen Übergang durch eine spanabhebende Bearbeitung der Führungsvertiefungen beispielsweise durch Einschleifen der Führungsvertiefungen herzustellen.

Entscheidend für das erfindungsgemäße Konzept der ausreichenden Versorgung der Werkzeugschneiden mit Kühl-/Schmiermittel ist die Beaufschlagung der Spannuten mit einzelnen axial gerichteten Kühl-/Schmiermittelstrahlen. Dieses Konzept setzt allerdings nicht notwendigerweise voraus, dass das Werkzeug gerade genutet ist. Die Spannuten können auch wendelförmig verlaufen. Wenn die Spannuten geradlinig, d.h. axial ausgerichtet verlaufen, lässt sich ein noch größerer Füllungsgrad der Spannuten mit Kühl-/Schmiermittel im Eingriffsbereich des Schneidteils erzielen. Dabei ergibt sich der weitere Vorteil, dass das Herstellungsverfahren vereinfacht wird, indem die Schleifscheibe für das Einschleifen der Spannuten im Schneidteil gleichzeitig für die Herstellung der Führungsvertiefungen im Schaft des Werkzeugs genutzt werden kann. Außerdem erlaubt ein gerade genutetes Werkzeug die einstückige Herstellung des Werkzeugs im Extrusionsverfahren, was insbesondere dann von Vorteil ist, wenn als Werkstoff ein Hartstoff, vorzugsweise ein Sinterwerkstoff wie Vollhartmetall oder Cermet, zur Anwendung kommt.

Wenn zumindest der Schaft und der Einspannabschnitt des Werkzeugs aus sinterfähigem Material, wie zum Beispiel aus Vollhartmetall oder einem Cermet-Werkstoff hergestellt wird, lassen sich die Kühl-/Schmiermittelkanäle im Einspannabschnitt und gegebenenfalls die Führungsvertiefungen im Schaft im Werkzeugrohling so weit vorformen, dass entweder eine Nachbearbeitung nach dem Sinterprozess überhaupt nicht mehr erforderlich wird, oder auf ein Minimum beschränkt bleiben kann. Neben einer verbesserten Wirtschaftlichkeit bei der Herstellung des Werkzeugs ergibt sich darüber hinaus ein Minimum an Materialaufwand für das erforderliche Rohmaterial.

Das drehantreibbare, spanabhebende Werkzeug kann verschiedenste Anwendungsgebiete haben. Es kann beispielsweise als Feinbearbeitungswerkzeug, als Aufbohrwerkzeug, insbesondere als Reibahle, als Fräswerkzeug oder als Gewindeschneidwerkzeug ausgebildet sein. Insbesondere dann, wenn das Werkzeug, beispielsweise die Reibahle, mit einer über den Umfang ungleichmäßigen Verteilung der Schneidstollen ausgebildet ist, hat das erfindungsgemäße Werkzeug den besonderen Vorteil, dass die Versorgung der Schneiden mit Kühl-/Schmiermittel für alle Spannuten mit gleicher Qualität sichergestellt werden kann, ohne den herstellungstechnischen Aufwand vergrößern zu müssen. Für die ausreichende Versorgung der im Eingriff befindlichen Schneiden des Werkzeugs genügen für die gängigen Geometrien der in Frage kommenden Werkzeuge Strömungsmitteldrücke im Bereich zwischen 5 und 70 bar. Dies lässt es zu, mit Strömungsmitteln unterschiedlicher Konsistenz zu arbeiten, beispielsweise mit flüssigen Kühl-/Strömungsmitteln, aber auch mit Aerosolen, wie sie bei der Trockenbearbeitung bzw. bei der MMS-Technologie verwendet werden.

Mit der Weiterbildung des Anspruchs 20 gelingt es, die einzelnen, aus dem Einspannabschnitt austretenden Kühl-/Schmiermittelstrahlen zusätzlich zu stabilisieren, um längere axiale Distanzen zwischen Einspannabschnitt und Schneidteil so zu überbrücken, dass die einzelnen Kühl-/Schmiermittelstrahlen die zugeordneten Spannuten mit möglichst großer Flächenüberlappung erreichen.

Weitere vorteilhafte Ausgestaltungen der Erfindung sind Gegenstand der übrigen Unteransprüche.

Nachstehend werden anhand schematischer Zeichnungen mehrere Ausführungsbeispiele der Erfindung näher erläutert. Es zeigen:
Figur 1 eine schematische Seitenansicht eines erfindungsgemäßen drehantreibbaren spanabhebenden Werkzeugs in der Ausgestaltung als Reibahle nach einer ersten Ausführungsform;
Figur 2 die Ansicht gemäß "II" in Figur 1;
Figur 3 die Ansicht gemäß "III" in Figur 1;
Figur 4 in vergrößerter Darstellung den Schnitt "IV-IV' in Figur 1;
Figur 5 in vergrößerter Darstellung den Schnitt "V-V" in Figur 1;
Figur 6 in vergrößerter Darstellung die Einzelheit "VI" in Figur 2;
Figur 7 eine der Figur 1 entsprechende Seitenansicht einer modifizierten Ausführungsform des erfindungsgemäßen drehantreibbaren spanabhebenden Werkzeugs in der Ausgestaltung als Reibahle; wobei das Werkzeug gemäß Figur 7 aus dem gleichen Rohling wie dasjenige in Figur 1 herstellbar ist;
Figur 8 in etwas vergrößerter Darstellung die Seitenansicht gemäß "VIII" in Figur 7;
Figur 9 eine der Figur 8 entsprechende Seitenansicht gemäß "IX" in Figur 7;
Figur 10 in vergrößerter Darstellung die Schnittansicht gemäß "X-X" in Figur 7;
Figur 11 die Ansicht des Schnitts "XI-XI" in Figur 7;
Figur 12 in vergrößerter Darstellung die Einzelheit "XII" in Figur 8;
Figur 13 eine schematische Ansich eines nicht erfindungsgemäßen Werkzeugs in der Ausgestaltung als Reibahle;
Figur 14 in stark vergrößerter Darstellung die Seitenansicht gemäß "XIV" in Figur 13;
Figur 15 eine perspektivische Ansicht des Werkzeugs gemäß Figur 13 und 14;
Figur 16 einen Längsquerschnitt des erfindungsgemäßen Werkzeugs nach einer dritten Ausführungsform; und
Figur 17 einen Längsquerschnitt des erfindungsgemäßen Werkzeugs nach einer vierten Ausführungsform.

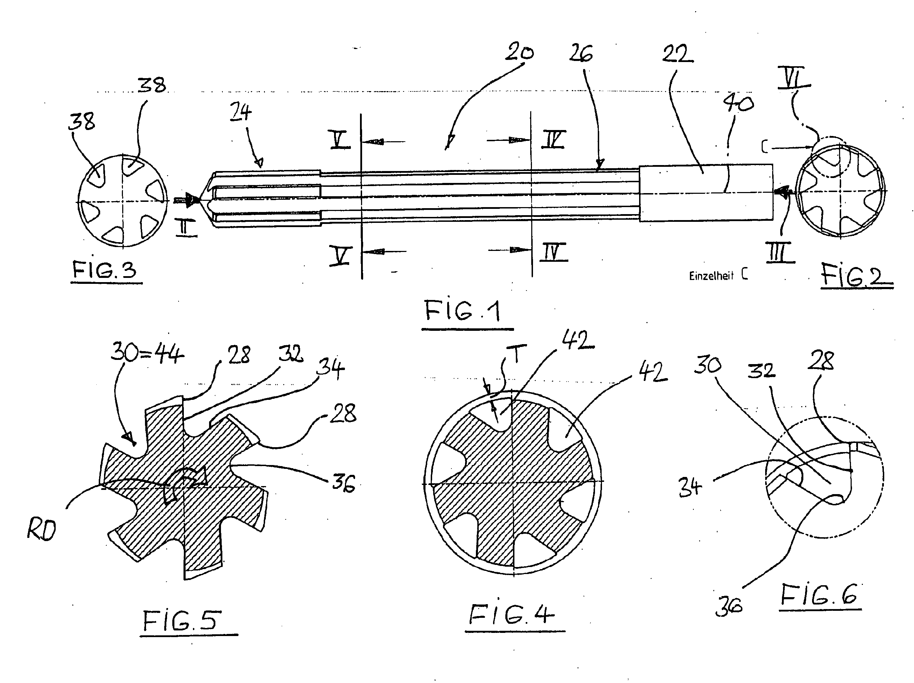

In den Figuren 1 bis 6 ist eine erste Ausführungsform eines drehantreibbaren, spanabhebenden Bohrungsnachbearbeitungswerkzeugs in der Ausgestaltung als Reibahle, insbesondere als Hochleistungs-Reibahle gezeigt. Das mit dem Bezugszeichen 20 bezeichnete drehantreibbare, spanabhebende Feinbearbeitungswerkzeug ist einstückig ausgebildet und besteht aus einem Sinterwerkstoff, wie z.B. Vollhartmetall oder einem Cermet-Werkstoff, d.h. einem Sinterwerkstoff, der als wesentlichen Härteträger die Carbide und Nitride des Titans (TiC, TiN) besitzt und bei dem als Bindephase überwiegend Nickel zum Einsatz kommt.

Das Werkzeug hat drei Abschnitte, nämlich einen Einspannabschnitt 22, ein Schneidteil 24 und einen dazwischen liegenden, im Durchmesser verringerten Schaft 26. Das Schneidteil 24 ist gerade genutet und hat eine Mehrzahl von Schneidkanten 28 zwischen denen sich jeweils eine Spannut 30 befindet. Die Spannut hat im wesentlichen zwei Flanken, nämlich eine zur Schneidkante führende erste Flanke 32 und eine dazu im Winkel verlaufende zweite Flanke 34, sowie einen dazwischen liegenden gerundeten Nutgrund 36 (siehe Figur 6). Die Schneidkanten 28 sind bei dem Ausführungsbeispiel gemäß Figur 1 bis 6 über den Umfang gleichmäßig verteilt. Die Teilung kann jedoch ungleichmäßig sein, was bei schnell laufenden Hochleistungs-Reibahlen den Vorteil einer verbesserten Laufruhe und verringerten Schwingungsneigung mit sich bringt.

Die Besonderheit des in Figuren 1 bis 6 gezeigten Werkzeugs besteht in der Ausgestaltung der in das Werkzeug integrierten Kühl-/Schmiermittelversorgung, die nachfolgend näher beschrieben wird:
Im Einspannabschnitt 22 sind in axialer Richtung fluchtend mit den Spannuten 30 innenliegende Kühlkanäle 38 ausgebildet, die sich jeweils parallel zur Werkzeugachse 40 erstrecken und auf der dem Schneidteil 60 zugewandten Seite des Einspannabschnitts 22 jeweils eine axiale Austritts- bzw. Mündungsöffnung 42 ausbilden. Die Querschnitte der innenliegenden Kühl-/Schmiermittelkanäle 38 und damit der Mündungsöffnungen 42 sind im wesentlichen deckungsgleich mit dem Querschnitt der Spannuten. Im Einzelnen ist also der Querschnitt der jeweiligen axialen Austrittsöffnung 42 für den Kühl-/Schmiermittelstrahl mit einem Querschnitt versehen, der dem Querschnitt der zugehörigen Spannut 30 angepasst ist.

Bei der Ausgestaltung gemäß Figur 1 bis 6 entspricht der Querschnitt der axialen Austrittsöffnung 42 der Geometrie der zugeordneten Spannut 30 im Bereich des Nutgrundes 36 und der beiden Nutflanken 32 und 34. Lediglich die radiale Erstreckung der Mündungsöffnung 42 ist um das Maß T der verbleibenden Wandstärke im Einspannabschnitt 22 gegenüber der Tiefe der Spannut 30 reduziert.

Zwischen der Austritts- bzw. Mündungsöffnung 42 und der Spannut 30 erstreckt sich eine die axiale Verlängerung der Spannut 30 bildende Führungsvertiefung 44, die im Schnitt gemäß Figur 5 mit der Spannut 30 überwiegend deckungsgleich ist. Mit anderen Worten, die Führungsvertiefung hat im Querschnitt betrachtet im wesentlichen die Gestalt der Spannut mit den Flanken 32 und 34 und dem dazwischen liegenden Nutgrund 36.

Auf der in Figur 1 rechten Seite des Einspannabschnitts 22 wird - wenn das Werkzeug in einer Werkzeugaufnahme eingespannt ist - über eine geeignete Schnittstelle Kühl-/Schmiermittel unter einem Druck von beispielsweise 5 bis 70 bar eingespeist. Hierbei kann es sich um flüssiges oder gasförmiges, das Schmiermittel transportierendes Strömungsmittel handeln, beispielsweise um ein Aerosol, d.h. mit Schmiermitteltröpfchen versetzte Druckluft. Die Drehrichtung des Werkzeugs ist in Figur 5 mit dem Pfeil RD angedeutet.

Das im Einspannabschnitt 22 über eine übliche Schnittstelle eingespeiste Kühl-/Strömungsmittel strömt somit mit hoher Geschwindigkeit durch die im Einspannabschnitt 22 ausgebildeten Kühl-/Schmiermittelkanäle 38 und tritt an den Mündungsöffnungen 42 mit axialer Ausrichtung aus. Im radial inneren Bereich sind die einzelnen Kühl-/Schmiermittelstrahlen vom Grund und den Flanken der Führungsvertiefung 44 geführt, im radial außenliegenden Bereich liegen die einzelnen Kühl-/Schmiermittelstrahlen offen.

Die einzelnen, über den Umfang entsprechend der Teilung des Werkzeugs verteilten Kühl-/Schmiermittelstrahlen treffen nach Durchströmung der Führungsvertiefungen 44 die Spannuten. Sobald das Werkzeug in die zu bearbeitende Bohrung, vorzugsweise eine Durchgangsbohrung, eintaucht, wird die Spannut von der Bohrungswandung weitestgehend über den gesamten Umfang geschlossen, so dass erneut ein quasi geschlossener Strömungskanal für das eingespeiste Kühl-/Strömungsmittel geschaffen wird. Das in diesem Strömungskanal von den zugeordneten innenliegenden Kühl-/Schmiermittelkanälen 38 kommende und aufgefangene Strömungsmittel hat - wie durch Versuche gezeigt werden konnte - schon bei Strömungsmittel-Systemdrücken von über 5 bar, vorzugweise von über 10 bar, einen derartig hohen Massendurchsatz, dass sich in den Spannuten ein Strömungsprofil ausbildet, welches sicherstellt, dass die Schneidkanten prozesssicher mit einer ausreichenden Schmiermittelmenge versorgt werden. Dadurch ist sichergestellt, dass die Standzeit des Werkzeugs auf einem ausreichenden Niveau gehalten werden kann.

Durch Versuche wurde herausgefunden, dass die Durchflussmenge des Kühl-/Schmiermittels in den Spannuten ganz entscheidend von der Profilgestaltung der im Einspannabschnitt ausgebildeten Kühl-/Schmiermittelkanäle abhängt.

Durch die erfindungsgemäße, außenliegende Zuführung des Kühl-/Schmiermittels und durch den erfindungsgemäß-vergrößerten Querschnitt der innenliegenden Kühl-/Schmiermittelkanäle im Einspannabschnitt 22 kann die zu den Schneiden geführte Kühl-/Schmiermittelmenge im Vergleich zu Werkzeugen mit zentralem innenliegenden Versorgungskanal erheblich angehoben werden. Dies kann nicht nur zur Verbesserung der Standzeit der Schneiden, sondern gleichzeitig zu einer Verbesserung des Späne-Abtransports genutzt werden.

Die Zuführung des Kühl-/Schmiermittels erfolgt bei dem erfindungsgemäßen Werkzeug darüber hinaus sehr verlustarm, da mehrfache Umlenkungen vermieden werden. Da eine Vielzahl von verhältnismäßig großflächigen Kühl-/Schmiermittelkanälen im Einspannabschnitt und zusätzlich Führungsvertiefungen im Schaft des Werkzeugs ausgebildet sind, ergibt sich für das Werkzeug ein geringes Gewicht, beziehungsweise ein geringer Rohmaterialbedarf für den Fall, dass das Werkzeug aus einem Sinterrohling hergestellt wird.

Die innenliegenden Kühl-/Schmiermittelkanäle im Einspannabschnitt, die Führungsvertiefungen im Schaft, und auch die Spannuten im Schneidteil können bereits im Sinterrohling weitestgehend mit Endmaß im Urformprozess hergestellt werden. Eine Bearbeitung der innenliegenden Kühlkanäle im Einspannabschnitt ist dann nicht mehr erforderlich. Ebenso kann das Einschleifen der Führungsvertiefungen im Schaft entweder ganz entfallen, oder auf ein Minimum beschränkt werden. Lediglich im Bereich des Schneidteils sind dann spanabhebende Bearbeitungsvorgänge, nämlich das Schleifen auf Endmaß, erforderlich, wodurch sich ein stark verringertes Zeitspanvolumen bei der Herstellung des Werkzeugs ergibt.

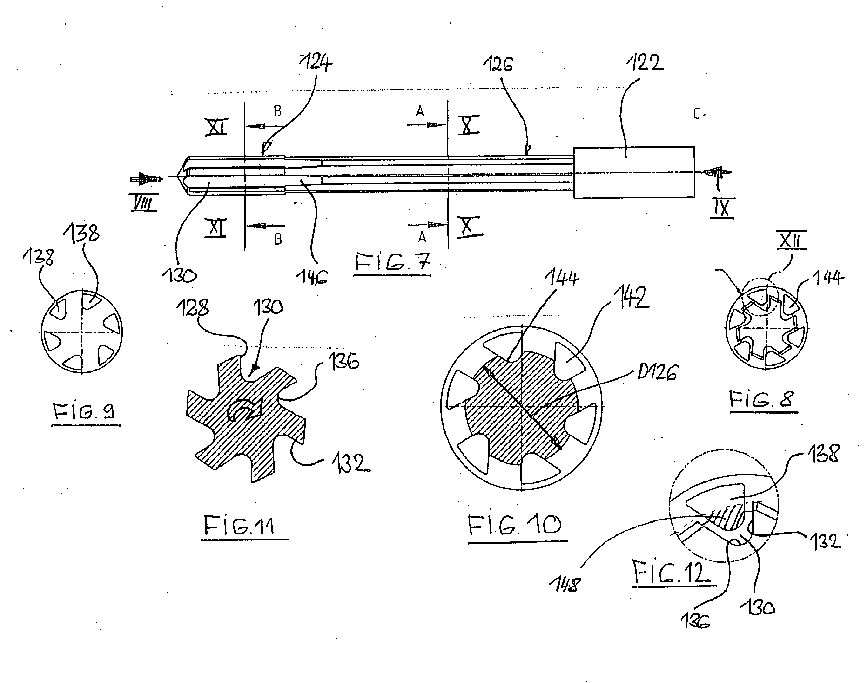

Anhand der Figuren 7 bis 12 wird eine weitere Ausführungsform des Werkzeugs beschrieben. Dabei werden diejenigen Komponenten des Werkzeugs, die denjenigen der Ausführungsform nach den Figuren 1 bis 6 entsprechen, mit ähnlichen Bezugszeichen versehen, denen jedoch eine "1" vorangestellt ist.

Das Werkzeug nach den Figuren 6 bis 12 kann aus dem gleichen Rohling hergestellt sein, wie dasjenige der Figuren 1 bis 6. Das Werkzeug ist jedoch für einen kleineren Nenn-Arbeitsdurchmesser ausgelegt.

Die Ausführungsform nach den Figuren 7 bis 12 unterscheidet sich somit von der Ausführungsform nach den Figuren 1 bis 6 dadurch, dass der Nenn-Arbeitsdurchmesser des Schneidteils 124 gegenüber demjenigen des Werkzeugs der Figuren 1 bis 6 verringert ist. Dadurch ist auch der Außendurchmesser des Schafts 126 kleiner, während der Einspannabschnitt 122 identisch mit dem Einspannabschnitt 22 der Figuren 1 bis 6 ausgebildet ist.

Aufgrund des verringerten Außendurchmessers D126 des Schafts 126 sind die Führungsvertiefungen 144 im Schaftteil 126 flacher als bei der Ausführungsform nach den Figuren 1 bis 6. Man erkennt aus der Figur 10, dass die innenliegenden Kühl-/Schmiermittelkanäle im Einspannabschnitt 122 wieder stufenlos in die zugeordneten Führungsvertiefungen 144 übergehen.

Allerdings sind die Spannuten 130 im Bereich des Schneidteils 124 radial weiter innenliegend als die Kühl-/Schmiermittelkanäle 138 bzw. die Führungsvertiefungen 144, was sich am besten aus der Figur 12 ergibt. Zwischen den Spannuten 130 und den Führungsvertiefungen 144 liegt ein Übergangsabschnitt 146, in dem sich die Führungsvertiefung 144 allmählich radial nach innen zur Spannut 130 hin erweitert. Es liegt somit ein sanfter Übergang der Bodenfläche von der Führungsvertiefung 144 zum Nutgrund 136 der Spannut 130 vor.

Die Kühl-/Schmiermittelversorgung der Schneidkanten 128 erfolgt in der gleichen Weise wie bei dem vorstehend anhand der Figuren 1 bis 6 beschriebenen Werkzeug:
Das aus den Mündungsöffnungen 144 austretende Kühl-/Schmiermittel strömt geführt durch die Führungsvertiefungen 144 in axialer Richtung zum Schneidteil 124. Im Bereich der Übergangsflächen können sich die Kühl-/Schmiermittelstrahlen radial nach innen etwas aufweiten und treffen in die Spannuten 130. Wie aus Figur 12 am besten ersichtlich, haben die axialen Austrittsöffnungen bzw. die Kühlkanäle 138 einen Querschnitt, der dem Querschnitt der zugehörigen Spannut 130 angepasst, d.h. geometrisch ähnlich ist. Mit anderen Worten, die Geometrie des Querschnitts der Kühl-/Schmiermittelkanäle 138 entspricht im Bereich der Flanken und der radial inneren Begrenzung der Kontur der Spannut 130, d.h. im Bereich des Nutgrundes 136 und der zur Schneidkante 128 führenden Flanke 132.

Es ergibt sich auf diese Weise eine Anpassung des Querschnitts der axialen Austrittsöffnung 142 hinsichtlich Lage und/oder Form an die Geometrie der zugeordneten Spannut 130 derart, dass sich in der axialen Projektion eine möglichst große Überdeckung der betreffenden Querschnittsflächen ergibt, die in Figur 12 durch eine schraffierte Fläche 148 angedeutet ist.

Das Werkzeug gemäß Figur 7 bis 12 wurde als Hochleistungs-Reibahle mit einem Nenndurchmesser von 6.2mm aus demselben Sinterrohling gefertigt, wie dasjenige Werkzeug der Figuren 1 bis 6 mit einem Arbeits-Nenndurchmesser von 8mm. Der Durchsatz des Kühl-/Strömungsmittels im Bereich der Spannuten konnte bei dem Werkzeug der Figuren 7 bis 12 auf einem Niveau gehalten werden, das immer noch 60% des Kühl-/Schmiermitteldurchsatzes der Ausführungsform nach den Figuren 1 bis 6 ausmachte. Der Druck des das Schmiermittel führenden Strömungsmittels lag im Bereich zwischen 10 und 70 bar.

Für diese Strömungsmitteldrücke konnte gezeigt werden, dass die auf die einzelnen Kühl-/Strömungsmittelstrahle einwirkende Fliehkraft die Versorgung der Schneiden mit einer ausreichenden Kühl-/Schmiermittelmenge nicht beeinträchtigt. Noch geringer waren die Abweichungen bei den jeweiligen Durchflussmengen an Kühl-/Schmiermittel an den Schneiden selbst Auch das Werkzeug der Figuren 7 bis 12 ist einfach und mit minimalem Rohstoffaufwand herstellbar. Das Zeitspanvolumen bei der Herstellung, d.h. beim Nutenschleifen, ist ebenso auf ein Minimum beschränkt.

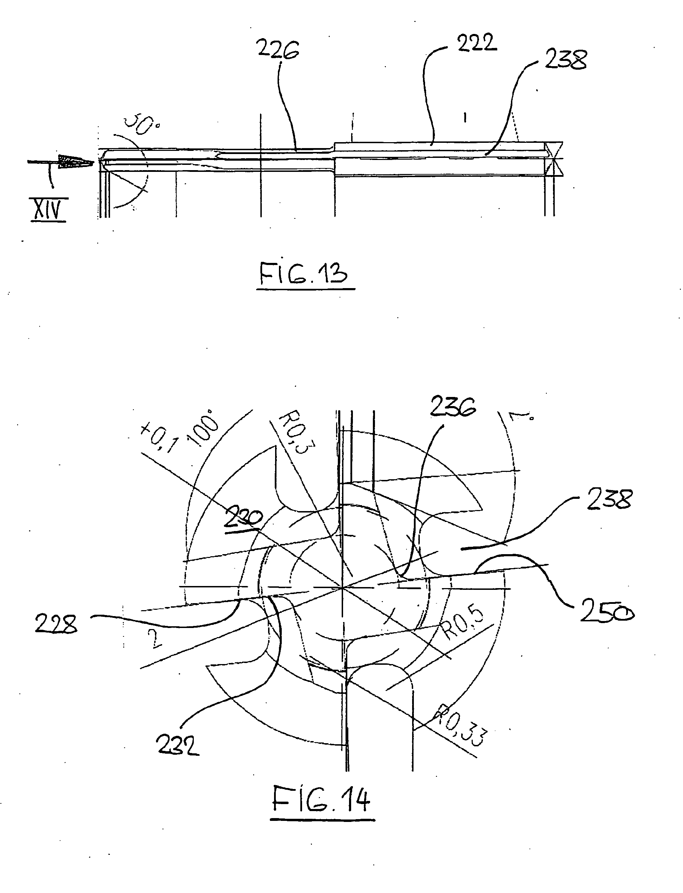

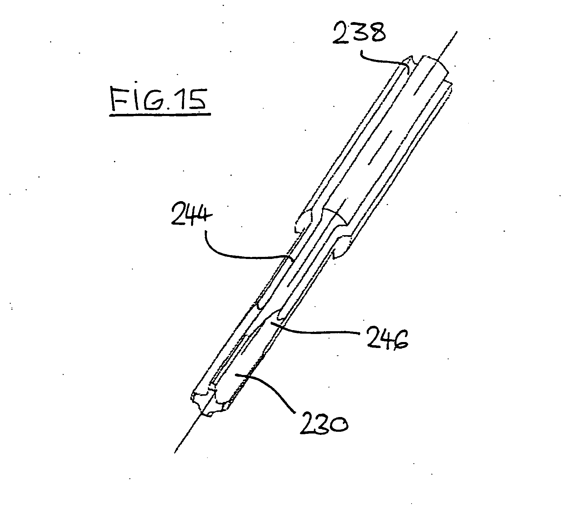

Schließlich wird anhand der Figuren 13 bis 15 ein drittes Ausführungsbeispiel eines Feinbearbeitungswerkzeugs in der Ausgestaltung als Hochleistungs-VHM-Reibahle beschrieben. Auch hier sind wieder diejenigen Komponenten, die den Bauabschnitten der zuvor beschriebenen Ausführungsbeispiele entsprechen, mit ähnlichen Bezugszeichen versehen, denen allerdings eine "2" vorangestellt ist.

Die nicht erfindungsgemäße gemäß Figuren 13 bis 15 unterscheidet sich von den zuvor beschriebenen Werkzeugen durch einen axial verlängerten Einspannabschnitt 222. Die in diesem Abschnitt ausgebildeten, erneut außen liegenden Kühl-/Schmiermittelkanäle 238 sind von radial offenen Schlitzen gebildet, die sich stufenlos in Führungsvertiefungen 244 des Schaftes 226 fortsetzen. Mit 230 bezeichnete Spannuten laufen über eine gerundete Übergangsfläche 246 in jeweils ein Führurigsvertiefung 244 aus. Wenn das Werkzeug in der Werkzeugaufnahme aufgenommen ist, sind die Kühl-/Schmiermittelkanäle vom Spannfutter radial außen geschlossen.

Die Lage- und Geometrie-Zuordnung zwischen Kühl-/Schmiermittelkanal 238, Führungsvertiefung 244 und Spannut 230 ergibt sich im einzelnen aus der Darstellung gemäß Figur 14. Man erkennt, dass eine Flanke 250 des Schlitzes 238 so gelegt ist, dass sie mit der zur Schneidkante 228 führenden Flanke 232 der Spannut im wesentlichen zusammenfällt.

Bei der Ausgestaltung nach Figur 13 bis 15 handelt es sich beispielsweise um eine Cermet-Relbahle mit einem Nenndurchmesser von 4mm. Der Rohling für das Werkzeug gemäß Figur 13 bis 15 kann damit genauso gut für eine Reibahle mit einem Nenndurchmesser von bis zu 5.5mm herangezogen werden. Es hat sich aber anhand von Versuchen gezeigt, dass selbst bei einem im Vergleich zum Einspannabschnitt kleinen Nenndurchmesser von 4mm durch die einzelnen axial gerichteten Kühl-/Schmiermittelstrahlen genügend Kühl-/Schmiermittel zu den Schneidkanten 228 im Eingriffsbereich des Werkzeugs geleitet werden kann, um die gewünschte Verbesserung der Standzeit sicherzustellen. Dabei ergibt sich mit dem Werkzeug der Figuren 13 bis 15 eine noch gesteigerte Materialersparnis beim Rohmaterial für den Sinterrohling, da die innenliegenden Kühl-/Schmiermittelkanäle im Einspannabschnitt flächenmäßig noch weiter vergrößert sind. Der Übergangsabschnitt 246 zwischen Spannut 230 und Führungsvertiefung 244 kann auf einfache Weise dadurch hergestellt werden, dass eine Schleifscheibe mit genügend großem Radius zum Einschleifen der Spannuten 230 verwendet wird.

Auch bei der Ausgestaltung des Werkzeugs nach den Figuren 13 bis 15 entspricht somit der Querschnitt der axialen Austrittsöffnung der innenliegenden Kühl-/Schmiermittelkanäle im wesentlichen der Geometrie der zugeordneten Spannut 230 zumindest im Bereich des Nutgrundes 236 und der zur Schneidkante 228 führenden Nutflanke 232, wodurch es gelingt, die an den Schneidkanten ankommende Menge an Schmiermittel auch dann ausreichend hoch zu halten, wenn in der axialen Projektion betrachtet nur ein Bruchteil des Querschnitts der Spannut vom Querschnitt des Kühl-/Schmiermittelstrahls abgedeckt ist.

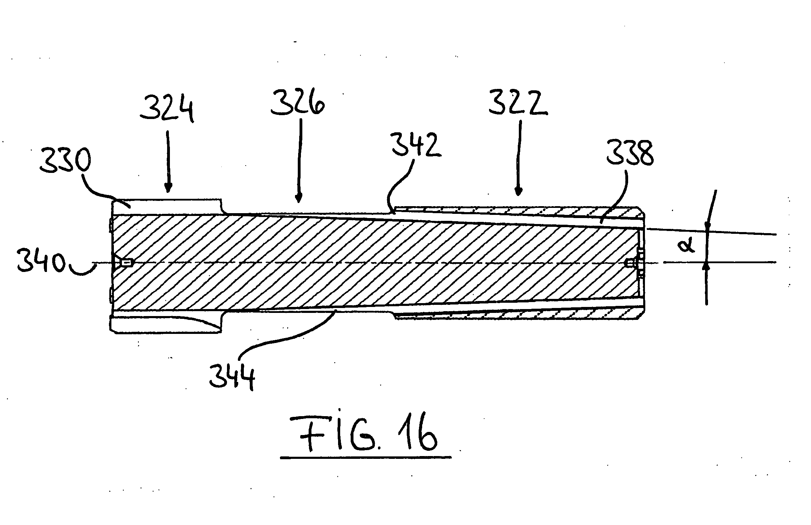

Anhand der Figur 16 wird eine dritte Ausführungsform des Werkzeugs beschrieben. Dabei werden diejenigen Komponenten des Werkzeugs, die denjenigen der Ausführungsform nach den Figuren 1 bis 6 entsprechen, mit ähnlichen Bezugszeichen versehen, denen jedoch eine "3" vorangestellt ist.

Die dritie Ausführungsform entspricht im Wesentlichen der ersten Ausführungsform mit der Ausnahme, dass sich die Kühl-/Schmiermittelkanäle 338 im Einspannabschnitt 322 nicht parallel zur Werkzeugachse 340 erstrecken, sondern zu dieser in einem Anstellwinkel α geführt sind. Der Anstellwinkel α ist so gewählt, dass eine gedachte Verlängerung der Kühl-/Schmiermittelkanäle 338 über den dazwischen liegenden Schaftabschnitt 326 hinweg im Wesentlichen mit den Spannuten 330 des Schneidtells 324 fluchtet. Zwischen den Mündungsöffnungen 342 und den Spannuten 330 erstrecken sich in axialer Verlängerung der Kühl-/Schmiermittelkanäle 338 entsprechende Führungsvertiefungen am Schaftteil, welche ebenfalls im Winkel α zur Werkzeugachse angestellt sind.

Bei der in Figur 16 gezeigten dritten Ausführungsform liegen die Spannuten 330 des Schneidteils 324 auf einem größeren Teilkreis als die Austrittsöffnungen 342 der Kühl-/Schmiermittelkanäle 338. Jedoch ist auch der umgekehrte Fall denkbar. Durch die Anstellung der Kühl-/Schmiermittelkanäle 338 zur Werkzeugachse 440 wird erreicht, dass der Durchmesser des Einspannabschnitts 322 unabhängig von dem des Schneidteils 324 gestaltet sein kann und ein etwaiger, daraus resultierender Unterschied der radialen Abstände der Mündungsöffnungen 342 und der Spannnuten 330 von der Werkzeugachse 340 ausgeglichen werden kann.

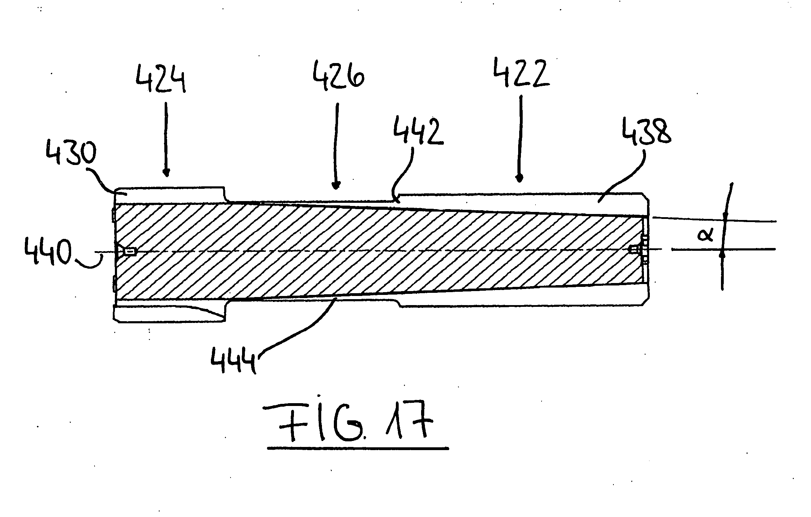

Figur 17 zeigt eine vierte Ausführungsform des Werkzeugs, welche im Grunde eine Kombination der dritten und vierten Ausführungsformen darstellt. Dabei werden diejenigen Komponenten des Werkzeugs, die denjenigen der Ausführungsform nach den Figuren 13 bis 16 entsprechen, mit ähnlichen Bezugszeichen versehen, denen jedoch eine "4" vorangestellt ist.

Das in Figur 17 gezeigte erfindungsgemäße Werkzeug weist radial offene Kühl-/Schmiermittelkanäle 438 im Einspannabschnitt 422 auf, weiche in einem Anstellwinkel α zur Werkzeugachse 440 geführt sind und über entsprechende ebenfalls angestellte Führungsvertiefungen 444 am Schaftteil 426 im Wesentlichen mit den Spannuten 430 des Schneidteils 424 fluchten.

Selbstverständlich sind Abweichungen von den beschriebenen Ausführungsbeispielen möglich, ohne den Grundgedanken der Erfindung zu verlassen.

So ist es beispielsweise nicht unbedingt erforderlich, den Schneidkopf einstückig mit dem Rest des Werkzeugs auszubilden. Der Schneidkopf kann auch an den Schaft in bekannter Weise dreh- und axialfest angesetzt, beispielsweise angelötet, werden. Die vorstehend angesprochenen Vorteile bleiben bei dieser Variante sämtlich erhalten.

Das Werkzeug selbst muss auch nicht notwendigerweise aus einem Sinterwerkstoff hergestellt sein.

Die verschiedenen Funktionsabschnitte des Werkzeugs können darüber hinaus mit an sich bekannten Beschichtungen versehen sein. Schließlich kann das Schneidteil des Werkzeugs auch mit Schneideinsätzen ausgestattet sein.

Sämtliche, vorstehend beschriebene Werkzeuge sind als Reibahlen ausgebildet. Es soll jedoch hervorgehoben werden, dass das erfindungsgemäße Werkzeug gleichermaßen als gewöhnliches Aufbohrwerkzeug, als Fräswerkzeug oder als Gewinde-Schneidwerkzeug ausgebildet sein kann.

Wenn es sich um ein gerade genutetes Werkzeug handelt, ergeben sich zusätzliche Vorteile bei der Herstellung, insbesondere dann, wenn das Werkzeug aus einem Sintermaterialrohling hergestellt wird, der beispielsweise extrudiert oder in einem Formpressverfahren mit bereits eingearbeiteten innenliegenden Kühl-/Schmiermittelkanälen und/oder Führungsvertiefungen und/oder vorbereiteten Spannuten ausgebildet werden kann.

Das Schneidteil kann jedoch auch mit wendelförmigen Spannuten ausgestattet sein. In diesem Fall kann es von Vorteil sein, wenn das Schneidteil als separates Bauteil an dem Schaft angesetzt ist.

Die angestellten Kühl-/Schmiermittelkanäle der dritten und vierten Ausführungsform können auch direkt aus einem zentralen Kühl-/Schmiermittelkanal abzweigen, wodurch sich entsprechende, radial verlaufende Verbindungskanäle zwischen der Kühlmitteleinspeisung und den von der Werkzeugachse beanstandeten und in Umfangsrichtung verteilten Kühl-/Schmiermittelkanälen erübrigen.

Die Erfindung schafft somit ein drehantreibbares, spanabhebendes Werkzeug, vorzugsweise in der Ausgestaltung als Feinbearbeitungswerkzeug, wie. z.B. als Hochleistungsreibahle, mit integrierter Kühl-/Schmiermittelversorgung, zur Bearbeitung von Bohrungen, vorzugsweise von Durchgangsbohrungen. Das Werkzeug hat ein Schneidteil, an dem eine Vielzahl von Schneiden beziehungsweise Schneidkanten und Spannuten ausgebildet sind, und einen Schaft, der auf einer dem Schneidteil abgewandten Seite einen Einspannabschnitt ausbildet. Zur wirksameren Versorgung der Schneidkanten mit Kühl-/Strömungsmittel bei gleichzeitiger Verbesserung der Wirtschaftlichkeit des Herstellungsverfahrens sind im Einspannabschnitt eine der Anzahl der Spannuten entsprechende Anzahl von Kühl- /Schmiermittelkanälen ausgebildet, die jeweils eine axiale Austrittsöffnung haben und entlang des Schafts zu einer zugeordneten Spannut des Schneidteils geführt sind.

## Patentansprüche

1. Drehantreibbares spanabhebendes Feinbearbeitungswerkzeug, insbesondere Reibahle, mit integrierter Kühl/Schmiermittelversorgung, zur Bearbeitung von Bohrungen, insbesondere Durchgangsbohrungen, mit einem Schneidteil (24; 124; 224; 324; 424), an dem eine Vielzahl von Schneiden (28; 128; 228; 328; 428) bzw. Schneidkanten und Spannuten (30; 130; 230; 330; 430) ausgebildet sind, und einem Schaft (26; 126; 226; 326; 426), der auf einer dem Schneidteil (24; 124; 224; 324; 424) abgewandten Seite einen Einspannabschnitt (22; 122; 222; 322; 422) ausbildet, wobei der Schaft zwischen dem Schneidteil und dem Einspannabschnitt ferner einen Mittelabschnitt aufweist, dessen Durchmesser geringer ist als der Durchmesser des Einspannabschnitts, wobei im Einspannabschnitt (22; 122; 222; 322; 422) eine der Anzahl der Spannuten (30; 130; 230; 330; 430) entsprechende Anzahl von Kühl-/Schmiermittelkanälen (38; 138; 238; 338; 438) ausgebildet sind, die jeweils eine axiale Austrittsöffnung (42; 142; 242; 342; 442) aus dem Einspannabschnitt (22; 122; 222; 322; 422) haben und die sich jeweils in einer am Mittelabschnitt des Schaft (26; 126; 226; 326; 426) ausgebildeten Führungsvertiefung (44; 144; 244; 344; 444) entlang fortsetzen, die zu der zugeordneten Spannut (30; 130; 230; 330; 430) des Schneidteils (24; 124; 224; 324; 424) führt, wobei
die jeweilige axiale Austrittsöffnung (42; 142; 242; 342; 442) der Kühl-/Schmiermittelkanäle (38; 138; 238; 338; 438) im Einspannabschnitt (22; 122; 222; 322; 422) einen Querschnitt hat, der dem Querschnitt der zugehörigen Spannut (30; 130; 230; 330; 430) derart angepasst ist,
dass der Querschnitt der axialen Austrittsöffnung (42; 142; 242; 342; 442) im Wesentlichen der Geometrie der zugeordneten Spannut (30; 130; 230) zumindest im Bereich des Nutgrundes (36; 136; 236; 336; 436) und der zur Schneidkante (28; 128; 228; 328; 428) führenden Flanke (32; 132; 232; 332; 432) entspricht.

2. Werkzeug nach Anspruch 1, **dadurch gekennzeichnet, dass** die Kühl-/Schmiermittelkanäle (38; 138; 338) im Einspannabschnitt (22; 122; 322) umfangsseitig geschlossen sind.

3. Werkzeug nach Anspruch 1, **dadurch gekennzeichnet, dass** die Kühl-/Schmiermittelkanäle (238; 438) im Einspannabschnitt (222; 422) radial offen sind.

4. Werkzeug nach einem der Ansprüche 1 bis 3, **dadurch gekennzeichnet, dass** der Querschnitt der axialen Austrittsöffnung (42; 142; 242) hinsichtlich Lage und/oder Form der Geometrie der zugeordneten Spannut (30; 130; 230) derart angepasst ist, dass sich in der axialen Projektion eine möglichst große Überdeckung (148) der betreffenden Querschnittsflächen ergibt.

5. Werkzeug nach einem der Ansprüche 1 bis 3, **dadurch gekennzeichnet, dass** die Kühl-/Schmiermittelkanäle (338; 438) im Einspannabschnitt (322; 422) in der Weise aus dem Einspannabschnitt (322; 422) austreten, dass sie unter einem Anstellwinkel (α) zu einer zugeordneten Spannut (330; 430) des Schneidteils (324; 424) geführt sind.

6. Werkzeug nach Anspruch 5, **dadurch gekennzeichnet, dass** Führungsvertiefung (44; 144; 244; 344; 444) zu der zugeordneten Spannut (30; 130; 230; 330; 430) des Schneidteils (24; 124; 224; 324; 424) unter dem Anstellwinkel (α) geführt ist.

7. Werkzeug nach einem der Ansprüche 1 bis 6, **dadurch gekennzeichnet, dass** die Kühl-/Schmiermittelkanäle (38; 138; 238; 338; 438) im Einspannabschnitt (22; 122; 222; 322; 422) im radial innenliegenden Bereich stufenlos in die zugeordneten Führungsvertiefungen (44; 144; 244; 344; 444) übergehen.

8. Werkzeug nach einem der Ansprüche 1 bis 7, **dadurch gekennzeichnet, dass** die Spannuten (30; 130; 230; 330; 430) geradlinig verlaufen.

9. Werkzeug nach einem der Ansprüche 1 bis 8, **dadurch gekennzeichnet, dass** es aus einem Hartstoff, wie z.B. aus Vollhartmetall oder einem Cermet-Werkstoff hergestellt ist.

10. Werkzeug nach Anspruch 9, **dadurch gekennzeichnet, dass** die Führungsvertiefungen (44; 144; 244; 344; 444) und die Kühl-/Schmiermittelkanäle (38; 138; 238; 338; 438) im Einspannabschnitt (22; 122; 222; 322; 422) zumindest teilweise im Werkzeugrohling vorgeformt sind.

11. Werkzeug nach einem der Ansprüche 1 bis 10, **gekennzeichnet durch** die Ausgestaltung als Aufbohrwerkzeug, insbesondere als Reibahle.

12. Werkzeug nach einem der Ansprüche 1 bis 10, **gekennzeichnet durch** die Ausgestaltung als Fräswerkzeug.

13. Werkzeug nach einem der Ansprüche 1 bis 10, **gekennzeichnet durch** die Ausgestaltung als Gewindeschneidwerkzeug.

14. Verfahren zur Versorgung der Schneiden eines Werkzeugs nach einem der Ansprüche 1 bis 13 mit einem unter Druck stehenden Kühl- und Schmiermittel, **dadurch gekennzeichnet, dass** das Kühl- und Schmiermittel über den Einspannabschnitt (22; 122; 222; 322; 422) unter einem Druck zwischen 5 und 80 bar, vorzugsweise zwischen 10 und 70 bar zugeführt wird.

15. Verfahren nach Anspruch 14, **dadurch gekennzeichnet, dass** das Kühl- und Schmiermittel von einem wässrigen Strömungsmittel gebildet ist.

16. Verfahren nach Anspruch 14, **dadurch gekennzeichnet, dass** das Kühl- und Schmiermittel von einem gasförmigen Fluid gebildet ist, das mit einem Schmiermedium versetzt ist.

17. Verfahren nach einem der Ansprüche 14 bis 16, **dadurch gekennzeichnet, dass** die Strömung des Kühl- und Schmiermittels im Einspannabschnitt (22; 122; 222; 322; 422) mit einem Drall um die Strömungsachse beaufschlagt wird.

## Claims

1. Rotatably drivable precision machining tool, in particular reamer, with integrated coolant/lubricant supply for machining of holes, in particular through holes, with a cutting section (24; 124; 224; 324; 424), on which a plurality of cutting edges (28; 128; 228; 328; 428) or cutting edges and chip flutes (30; 130; 230; 330; 430) are formed, and a shank (26; 126; 226; 326; 426) which forms a chucking section (22; 122; 222; 322; 422) on a side facing away from the cutting section (24; 124; 224; 324; 424), wherein the shank furthermore has a middle section between the cutting section and the chucking section, whose diameter is smaller than the diameter of the chucking section, wherein in the chucking section (22; 122; 222; 322; 422) a number of coolant/lubricant channels (38; 138; 238; 338; 438) corresponding to the number of chip flutes (30; 130; 230; 330; 430) are formed, which each have an axial outlet opening (42; 142; 242; 342; 442) from the chucking section (22; 122; 222; 322; 422), and each extend into a guiding recess (44; 144; 244; 344; 444) which is formed in the middle section of the shank (26; 126; 226; 326; 426), and which leads to the associated chip flute (30; 130; 230; 330; 430) of the cutting section (24; 124; 224; 324; 424), wherein in each case the axial outlet opening (42; 142; 242; 342; 442) of the coolant/lubricant channels (38; 138; 238; 338; 438) in the chucking section (22; 122; 222; 322; 422) has a cross section which is adapted to the cross section of the associated chip flute (30; 130; 230; 330; 430) in such a way that the cross section of the axial outlet opening (42; 142; 242; 342; 442) essentially matches the geometry of the associated chip flute (30; 130; 230) at least in the area of the flute base (36; 136; 236; 336; 436) and the face (32; 132; 232; 332; 432) leading to the cutting edge (28; 128; 228; 328; 428).

2. Tool according to claim 1, **characterized in that** the coolant/lubricant channels (38; 138; 338) in the chucking section (22; 122; 322) are closed on the circumferential side.

3. Tool according to claim 1, **characterized in that** the coolant/lubricant channels (238; 438) in the chucking section (222; 422) are radially open.

4. Tool according to any one of claims 1 to 3, **characterized in that** the cross section of the axial outlet opening (42; 142; 242) is with respect to position and/or shape of the geometry adapted to the associated chip flute (30; 130; 230) in such a way that an overlap (148) as big as possible in the axial projection of the respective cross sectional areas results.

5. Tool according to any one of claims 1 to 3, **characterized in that** the coolant/lubricant channels (338; 438) in the chucking section (322; 422) exit the chucking section (322; 422) in such a way that they are guided in an angle of attack (α) to an associated chip flute (330; 430) of the cutting section (324; 424).

6. Tool according to claim 5, **characterized in that** the guiding recess (44; 144; 244; 344; 444) is guided in the angle of attack (α) to the associated chip flute (30; 130; 230; 330; 430) of the cutting section (24; 124; 224; 324; 424).

7. Tool according to any one of claims 1 to 6, **characterized in that** the coolant/lubricant channels (38; 138; 238; 338; 438) in the chucking section (22; 122; 222; 322; 422) in the radially inwards area merge continuously into the associated guiding recesses (44; 144; 244; 344; 444).

8. Tool according to any one of claims 1 to 7, **characterized in that** the chip flutes (30; 130; 230; 330; 430) are constructed linearly.

9. Tool according to any one of claims 1 to 8, **characterized in that** it is made from a hard material such as solid carbide or cermet.

10. Tool according to claim 9, **characterized in that** the guiding recesses (44; 144; 244; 344; 444) and the coolant/lubricant channels (38; 138; 238; 338; 438) in the chucking section (22; 122; 222; 322; 422) are at least partially preformed in the tool blank.

11. Tool according to any one of claims 1 to 10, **characterized by** the embodiment as a core drilling tool, particularly as a reamer.

12. Tool according to any one of claims 1 to 10, **characterized by** the embodiment as a milling tool.

13. Tool according to any one of claims 1 to 10, **characterized by** the embodiment as a tap tool.

14. Method for supplying the cutting edges of a tool according to any one of claims 1 to 13 with a pressurized coolant and lubricant **characterized in that** the coolant and lubricant is supplied via the chucking section (22; 122; 222; 322; 422) with a pressure of between 5 and 80 bar, preferably between 10 bar and 70 bar.

15. Method according to claim 14, **characterized in that** the coolant and lubricant is composed of an aqueous flow medium.

16. Method according to claim 14, **characterized in that** the coolant and lubricant is composed of a gaseous fluid which is mixed with a lubricating agent.

17. Method according to any one of claims 14 to 16, **characterized in that** the flow of the coolant and lubricant in the chucking section (22, 122; 222; 322; 422) is supplied with a twist around the axis of flow.

## Revendications

1. Outil d'usinage de précision par enlèvement de copeaux, entraînable en rotation, en particulier alésoir, avec une alimentation intégrée en fluide réfrigérant/ lubrifiant, pour l'usinage d'alésages, en particulier d'alésages traversants, avec une partie de coupe (24 ; 124 ; 224 ; 324 ; 424) sur laquelle est formée une pluralité de tranchants (28 ; 128 ; 228 ; 328 ; 428) ou d'arêtes de coupe et de gorges de dégagement (30 ; 130 ; 230 ; 330 ; 430), et avec une queue (26 ; 126 ; 226 ; 326 ; 426) laquelle forme une partie de serrage (22 ; 122 ; 222 ; 322 ; 422) sur un côté distant de la partie de coupe (24 ; 124 ; 224 ; 324 ; 424), la queue comportant en outre une partie centrale entre la partie de coupe et la partie de serrage, dont le diamètre est inférieur au diamètre de la partie de serrage, un nombre de canaux pour fluide réfrigérant/lubrifiant (38 ; 138 ; 238 ; 338 ; 438) correspondant au nombre des gorges de dégagement (30 ; 130 ; 230 ; 330 ; 430) étant formé dans la partie de serrage (22 ; 122 ; 222 ; 322 ; 422), lesquels présentent chacun une ouverture de sortie axiale (42 ; 142 ; 242 ; 342 ; 442) de la partie de serrage (22 ; 122 ; 222 ; 322 ; 422) et se prolongent chacun dans un évidement de guidage (44 ; 144 ; 244 ; 344 ; 444) formé sur la partie centrale de la queue (26 ; 126 ; 226 ; 326 ; 426), lequel mène à la gorge de dégagement (30 ; 130 ; 230 ; 330 ; 430) correspondante de la partie de coupe (24 ; 124 ; 224 ; 324 ; 424), l'ouverture de sortie axiale (42 ; 142 ; 242 ; 342 ; 442) des canaux pour fluide réfrigérant/lubrifiant (38 ; 138 ; 238 ; 338 ; 438) présentant dans la partie de serrage (22 ; 122 ; 222 ; 322 ; 422) une section transversale ajustée à la section transversale de la gorge de dégagement (30 ; 130 ; 230 ; 330 ; 430) correspondante, de telle manière que la section transversale de l'ouverture de sortie axiale (42 ; 142 ; 242 ; 342 ; 442) correspond sensiblement à la géométrie de la gorge de dégagement (30 ; 130 ; 230) correspondante, au moins dans la région du fond de gorge (36 ; 136 ; 236 ; 336 ; 436) et du flanc (32 ; 132 ; 232 ; 332 ; 432) menant à l'arête de coupe (28 ; 128 ; 228 ; 328 ; 428).

2. Outil selon la revendication 1, **caractérisé en ce que** les canaux pour fluide réfrigérant/lubrifiant (38 ; 138 ; 338) sont périphériquement fermés dans la partie de serrage (22 ; 122 ; 322).

3. Outil selon la revendication 1, **caractérisé en ce que** les canaux pour fluide réfrigérant/lubrifiant (238 ; 438) sont radialement ouverts dans la partie de serrage (222 ; 422).

4. Outil selon l'une des revendications 1 à 3, **caractérisé en ce que** la section transversale de l'ouverture de sortie axiale (42 ; 142 ; 242) est ajustée par sa position et/ou sa forme à la géométrie de la gorge de dégagement (30 ; 130 ; 230) correspondante, de telle manière qu'en projection axiale, il en résulte un chevauchement (148) aussi grand que possible des surfaces de section concernées.

5. Outil selon l'une des revendications 1 à 3, **caractérisé en ce que** les canaux pour fluide réfrigérant/ lubrifiant (338 ; 438) de la partie de serrage (322 ; 422) sortent de ladite partie de serrage (322 ; 422) de manière à être guidés suivant un angle d'incidence (α) vers une gorge de dégagement (330 ; 430) correspondante de la partie de coupe (324 ; 424).

6. Outil selon la revendications 5, **caractérisé en ce que** l'évidement de guidage (44 ; 144 ; 244 ; 344 ; 444) est guidé suivant l'angle d'incidence (α) vers la gorge de dégagement (30 ; 130 ; 230 ; 330 ; 430) correspondante de la partie de coupe (24 ; 124 ; 224 ; 324 ; 424).

7. Outil selon l'une des revendications 1 à 6, **caractérisé en ce que** les canaux pour fluide réfrigérant/ lubrifiant (38 ; 138 ; 238 ; 338 ; 438) de la partie de serrage (22 ; 122 ; 222 ; 322 ; 422) dans la région radialement intérieure passent de manière continue dans les évidements de guidage (44 ; 144 ; 244 ; 344 ; 444) correspondants.

8. Outil selon l'une des revendications 1 à 7, **caractérisé en ce que** les gorges de dégagement (30 ; 130 ; 230 ; 330 ; 430) s'étendent en ligne droite.

9. Outil selon l'une des revendications 1 à 8, **caractérisé en ce qu'**il est fabriqué dans une matière dure telle qu'un carbure massif ou un matériau cermet.

10. Outil selon la revendications 9, **caractérisé en ce que** les évidements de guidage (44 ; 144 ; 244 ; 344 ; 444) et les canaux pour fluide réfrigérant/lubrifiant (38 ; 138 ; 238 ; 338 ; 438) de la partie de serrage (22 ; 122 ; 222 ; 322 ; 422) sont au moins partiellement préformés dans l'ébauche d'outil.

11. Outil selon l'une des revendications 1 à 10, **caractérisé par** sa réalisation comme outil d'alésage, en particulier comme alésoir.

12. Outil selon l'une des revendications 1 à 10, **caractérisé par** sa réalisation comme outil de fraisage.

13. Outil selon l'une des revendications 1 à 10, **caractérisé par** sa réalisation comme outil de taille de filets.

14. Procédé d'alimentation des tranchants d'un outil selon l'une des revendications 1 à 13, en fluide réfrigérant et lubrifiant sous pression, **caractérisé en ce que** le fluide réfrigérant et lubrifiant est conduit par la partie de serrage (22 ; 122 ; 222 ; 322 ; 422) sous une pression comprise entre 5 et 80 bar, préférentiellement entre 10 et 70 bar.

15. Procédé selon la revendication 14, **caractérisé en ce que** le fluide réfrigérant et lubrifiant est constitué par un fluide aqueux.

16. Procédé selon la revendication 14, **caractérisé en ce que** le fluide réfrigérant et lubrifiant est constitué par un fluide gazeux auquel a été ajouté un agent lubrifiant.

17. Procédé selon l'une des revendications 14 à 16, **caractérisé en ce que** l'écoulement du fluide réfrigérant et lubrifiant dans la partie de serrage (22 ; 122 ; 222 ; 322 ; 422) est activé par une hélice autour de l'axe d'écoulement.
